(19) Europäisches Patentamt / European Patent Office / Office européen des brevets

(11) **EP 3 329 246 B1**

(12) **EUROPÄISCHE PATENTSCHRIFT**

(45) Veröffentlichungstag und Bekanntmachung des Hinweises auf die Patenterteilung:
**17.02.2021  Patentblatt 2021/07**

(21) Anmeldenummer: **16732580.2**

(22) Anmeldetag: **22.06.2016**

(51) Int Cl.:
*G01N 9/00* (2006.01)      *G01F 23/296* (2006.01)

(86) Internationale Anmeldenummer:
**PCT/EP2016/064402**

(87) Internationale Veröffentlichungsnummer:
**WO 2017/016760 (02.02.2017 Gazette 2017/05)**

(54) **PHASENREGELEINHEIT FÜR VIBRONISCHEN SENSOR**

PHASE CONTROL UNIT FOR VIBRONIC SENSOR

DÉPHASEUR POUR CAPTEUR VIBRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2015  DE 102015112421**

(43) Veröffentlichungstag der Anmeldung:
**06.06.2018  Patentblatt 2018/23**

(73) Patentinhaber: **Endress+Hauser SE+Co. KG
79689 Maulburg (DE)**

(72) Erfinder:
  • **GIRARDEY, Romuald
    68730 Blotzheim (FR)**
  • **SAUTERMEISTER, Manuel
    79730 Murg (DE)**
  • **BRENGARTNER, Tobias
    79312 Emmendingen (DE)**

(74) Vertreter: **Andres, Angelika Maria
    Endress+Hauser Group Services
    (Deutschland) AG+Co. KG
    Colmarer Straße 6
    79576 Weil am Rhein (DE)**

(56) Entgegenhaltungen:
  WO-A1-2004/034003      WO-A2-2004/018974
  DE-A1- 3 734 077      DE-A1- 10 057 974
  DE-A1-102005 015 547      US-A1- 2010 083 750

**Beschreibung**

Die Erfindung betrifft eine Vorrichtung sowie ein Verfahren zur Bestimmung und/oder Überwachung zumindest einer Prozessgröße eines Mediums. Bei der Vorrichtung handelt es sich um einen vibronischen Sensor und bei der zumindest einen Prozessgröße beispielsweise um einen Füllstand, einen Durchfluss, die Dichte und/oder Viskosität des Mediums.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit, zu mechanischen Schwingungen angeregt, welche wiederum beispielsweise ein piezoelektrischer Antrieb oder ein elektromagnetischer Antrieb sein kann. Die mechanisch schwingfähige Einheit kann im Falle von Durchflussmessgeräten aber auch als schwingfähiges Rohr ausgebildet sein, welches von dem jeweiligen Medium durchflossen wird, wie beispielsweise in einem nach dem Coriolis-Prinzip arbeitenden Messgerät.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit. Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher die Summe aller Verstärkungen im Schwingkreis, bzw. der Verstärkungsfaktor ≥1 ist und alle im Schwingkreis auftretenden Phasen ein Vielfaches von 360° ergeben, erfüllt sein.

Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden. Prinzipiell kann die Einstellung der Phasenverschiebung beispielsweise durch Verwendung eines geeigneten Filters vorgenommen werden, oder auch mittels eines Regelkreises auf eine vorgebbare Phasenverschiebung, den Sollwert, geregelt werden. Aus der DE102006034105A1 ist beispielsweise bekannt geworden, einen einstellbaren Phasenschieber zu verwenden. Die zusätzliche Integration eines Verstärkers mit einstellbarem Verstärkungsfaktor zur zusätzlichen Regelung der Schwingungsamplitude wurde dagegen in der DE102007013557A1 beschrieben. Die DE102005015547A1 schlägt die Verwendung eines Allpass-Filters vor. Die Einstellung der Phasenverschiebung ist außerdem mittels eines sogenannten Frequenzsuchlaufs möglich, wie beispielsweise in der der DE102009026685A1, DE102009028022A1, und DE102010030982A1 offenbart. Die Phasenverschiebung kann aber auch mittels einer Phasenregelschleife (engl. Phase-Locked-Loop, PLL) auf einen vorgebbaren Wert geregelt werden. Ein hierauf basierendes Anregungsverfahren ist Gegenstand der DE102010030982A1.

Sowohl das Anregesignal als auch das Empfangssignal sind charakterisiert durch ihre Frequenz f, Amplitude A und/oder Phase Φ. Entsprechend werden Änderungen in diesen Größen üblicherweise zur Bestimmung der jeweiligen Prozessgröße, wie einem vorgegebenen Füllstand, eines Durchflusses, der Dichte und/oder der Viskosität, herangezogen. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, bei Vorliegen einer vorgebbaren Phasenverschiebung zwischen Anregesignal und Empfangssignal unterschieden. Die Dichte und/oder Viskosität wiederum lassen sich mit einem derartigen Messgerät nur ermitteln, wenn die schwingfähige Einheit vom Medium bedeckt ist.

Zur Bestimmung und/oder Überwachung der Dichte eines Mediums sind aus der DE10057974A1 ein Verfahren sowie eine Vorrichtung bekannt geworden, mittels welcher/welchem der Einfluss von zumindest einer Störgröße, beispielswese der Viskosität, auf die Schwingungsfrequenz der mechanisch schwingfähigen Einheit zu ermittelt und entsprechend kompensiert wird. In der DE102006033819A1 ist ferner beschrieben, eine vorgebbare Phasenverschiebung zwischen dem Anregesignal und dem Empfangssignal einzustellen, bei welcher Auswirkungen von Änderungen der Viskosität des Mediums auf die mechanischen Schwingungen der mechanisch schwingfähigen Einheit vernachlässigbar sind. Dabei wird die Dichte im Wesentlichen nach der Formel

$$\rho_{Med} = \frac{1}{K}\left[\left(\frac{f_{0,Vak} + C \cdot t + A \cdot t^2}{f_{T,P,Med}}\right)^2 \cdot (1 + D \cdot p) - 1\right]$$

bestimmt, wobei K die Dichteempfindlichkeit der mechanisch schwingfähigen Einheit ist, $f_{0,vak}$ die Frequenz der mechanischen Schwingungen im Vakuum, C und A den linearen, bzw. quadratischen Temperaturkoeffizienten der mechanisch schwingfähigen Einheit, t die Prozesstemperatur, $f_{T,P,Med}$ die Frequenz der mechanischen Schwingungen im Medium, D den Druckkoeffizienten, und p der Druck des Mediums.

Die Viskosität eines Mediums mittels eines vibronischen Sensors kann wiederum anhand der Frequenz-Phase-Kurve ($\Phi=g(f)$) bestimmt werden, wie beispielweise in der DE10050299A1 beschrieben. Dieses Vorgehen basiert auf der Abhängigkeit der Dämpfung der schwingfähigen Einheit von der Viskosität des jeweiligen Mediums. Dabei gilt, dass je geringer die Viskosität ist, desto steiler fällt die Frequenz-Phase-Kurve ab. Um den Einfluss der Dichte auf die Messung zu eliminieren, wird die Viskosität anhand einer durch zwei unterschiedliche Werte für die Phase verursachten Frequenzänderung bestimmt, also mittels einer Relativmessung. Dazu können entweder zwei unterschiedliche Phasenwerte eingestellt und die zugehörige Frequenzänderung bestimmt werden, oder es wird ein vorgegebenes Frequenzband durchfahren und festgestellt, wenn zumindest zwei vorgegebene Phasenwerte erreicht werden.

Aus der DE102007043811A1 ist darüber hinaus bekannt geworden, aus einer Änderung der Eigenfrequenz und/oder Resonanzfrequenz und/oder der Phasenlage auf eine Änderung der Viskosität zu schließen und/oder aufgrund entsprechend hinterlegter Abhängigkeiten der Schwingungen der schwingfähigen Einheit von der Viskosität des jeweiligen Mediums die Viskosität zu bestimmen. Auch bei diesem Vorgehen muss die Abhängigkeit der Bestimmung der Viskosität von der Dichte des Mediums berücksichtigt werden.

Im Falle jeder der Prozessgrößen Füllstand, Dichte und Viskosität hängt also die Bestimmung in der Regel direkt mit der Einstellung einer vorgebbaren Phasenverschiebung zwischen Anregesignal und Empfangssignal zusammen. Damit hängt auch die Messgenauigkeit eines entsprechenden Messgeräts mit der Einstellgenauigkeit der Phasenverschiebung zusammen. Dies gilt insbesondere und in besonders hohem Maße für den Fall der Bestimmung der Viskosität und/oder Dichte, deren zuverlässige Bestimmung eine Phaseneinstellgenauigkeit von etwa 1° erfordert.

Aus der WO2004/018974A2 ist ein vibronischer Sensor bekannt geworden, bei dem der aus schwingfähiger Einheit und Rückkoppelelektronik gebildete Schwingkreis einen Mikroprozessor umfasst. Der Mikroprozessor korrigiert die Phase der Rückkoppelelektronik über eine vorgebbare Frequenz-Bandbreite derart, dass die Summe der Phasen der Rückkoppelelektronik und des Mikroprozessors einer vorgegebenen Funktion folgt.

Die zu einem bestimmten Zeitpunkt jeweils vorliegende Phasenverschiebung zwischen Anregesignal und Empfangssignal ergibt sich aus Summation der durch die verwendeten Komponenten jeweils verursachten Phasen. Je nach Anwendung wird dann eine bestimmte vorgebbare Phasenverschiebung eingestellt, mit welcher üblicherweise eine bestimmte Bedingung für das Schwingungsverhalten, wie beispielsweise dem Vorliegen einer resonanten Schwingung, verbunden ist. Während des Betriebs des vibronischen Sensors wird dann beispielsweise die zu einem bestimmten Zeitpunkt jeweils vorliegende Phasenverschiebung stets auf den Wert der vorgebbaren Phasenverschiebung geregelt.

Nun ist es jedoch so, dass sogenannte Prozessparameter auch einen Einfluss auf die jeweils vorliegende Phasenverschiebung haben können, und über diesen Einfluss wiederum die Messgenauigkeit des jeweiligen Messgeräts negativ beeinflussen können.

Insbesondere eine Änderung zumindest eines Prozessparameters kann eine Änderung der durch eine bestimmte Komponente des vibronischen Sensors verursachten Phase bewirken. In diesem Falle kann es dazu kommen, dass eine Regelung auf einen im Allgemeinen, zumindest zeitweise konstanten Wert für die vorgebbare Phasenverschiebung nicht mehr dazu führt, dass die daran geknüpfte Bedingung genau erfüllt wird. Das Schwingungsverhalten des vibronischen Sensors wird modifiziert und dadurch vermindert sich die Genauigkeit bei der Bestimmung der jeweiligen Prozessgröße.

Ausgehend von dieser Problematik liegt der vorliegenden Erfindung die Aufgabe zugrunde, eine Vorrichtung sowie ein Verfahren zur Bestimmung zumindest einer Prozessgröße eines Mediums bereitzustellen, welche/welches sich durch eine besonders hohe Messgenauigkeit auszeichnet.

Diese Aufgabe wird gelöst durch eine Vorrichtung zur Bestimmung und/oder Überwachung zumindest einer Prozessgröße eines Mediums in einem Behälter zumindest

- einer mechanisch schwingfähigen Einheit,
- einer Antriebs-/Empfangseinheit zur Anregung der mechanisch schwingfähigen Einheit zu mechanischen Schwingungen mittels eines elektrischen Anregesignals und zum Empfangen und Umwandeln der mechanischen Schwingungen in ein elektrisches Empfangssignal,
- einer Elektronikeinheit,

welche Elektronikeinheit dazu ausgestaltet ist,

⚬ das Anregesignal ausgehend vom Empfangssignal zu erzeugen,
⚬ eine vorgebbare Phasenverschiebung zwischen dem Anregesignal und dem Empfangssignal einzustellen, und
⚬ die zumindest eine Prozessgröße aus dem Empfangssignal zu bestimmen und/oder zu überwachen,

und wobei eine Phasenkorrektureinheit vorgesehen ist, welche Phasenkorrektureinheit zumindest dazu ausgestaltet ist,

⚬ aus zumindest einer von zumindest einem Prozessparameter abhängigen Kenngröße zumindest einer Komponente der Vorrichtung, insbesondere der Antriebs-/Empfangseinheit, einen Phasenkorrekturwert zu ermitteln, wobei die Kenngröße gegeben ist durch zumindest eine von zumindest einem Prozessparameter abhängige Kapazität ($C_{AE}$) oder Induktivität zumindest einer Komponente der Antriebs-/Empfangseinheit (5) oder durch zumindest eine von zumindest einem Prozessparameter abhängige Zeitkonstante ($\tau_{roz}$, $\tau_{ref}$), und
⚬ die vorgebbare Phasenverschiebung entsprechend des Phasenkorrekturwerts einzustellen.

Die vorliegende Erfindung behandelt also einen vibronischen Sensor mit einer Phasenkorrektureinheit. Mittels der Phasenkorrektureinheit kann der Einfluss zumindest eines Prozessparameters auf die jeweilige Messung eliminiert und dadurch eine deutlich erhöhte Messgenauigkeit erzielt werden. Handelt es sich beispielsweise bei der zu bestimmenden und/oder zu überwachenden Prozessgröße um einen vorgegebenen Füllstand, so erlaubt die erfindungsgemäße Vorrichtung eine erhöhte Genauigkeit bezüglich der Einstellung einer vorgebbaren Phasenverschiebung, wobei das Erreichen des vorgegebenen Füllstand in diesem Falle anhand des Empfangssignals bei der vorgebbaren Phasenverschiebung ermittelbar ist. Im Falle, dass die Dichte des Mediums bestimmt werden soll, gelten äquivalente Überlegungen. Ein besonderer Vorteil ergibt sich jedoch für die Bestimmung der Viskosität und/oder Dichte, für welche die Messgenauigkeit direkt mit der Einstellgenauigkeit der jeweiligen vorgebbaren Phasenverschiebung einhergeht.

Ändert sich die jeweils vorliegende Phasenverschiebung, beispielsweise aufgrund der Änderung zumindest eines Prozessparameters, so führt dies gegebenenfalls zum Auftreten einer zusätzlichen Phase. Dann gewährleistet die Einstellung der jeweils vorliegenden Phasenverschiebung auf den in der Regel zumindest zeitweise konstanten Wert für die vorgebbare Phasenverschiebung unter Umständen nicht mehr, dass eine bezüglich des Schwingungsverhaltens der schwingfähigen Einheit aufgestellten Bedingung, wie beispielsweise das Vorliegen einer resonanten Schwingung, erfüllt wird. Daraus resultiert wiederum gegebenenfalls eine Ungenauigkeit in der Bestimmung der jeweiligen Messgröße wie beispielsweise der Frequenz, und/oder der jeweiligen Prozessgröße. Mittels der erfindungsgemäßen Phasenkorrektureinheit kann nun die vorgebbare Phasenverschiebung geeignet eingestellt werden, so dass die Bestimmung bzw. Ermittlung der jeweiligen Messgröße und/oder Prozessgröße jeweils weitgehend unbeeinflusst von zumindest einem Prozessparameter, insbesondere unbeeinflusst von einer Änderung des zumindest einen Prozessparameters, erfolgen kann.

Gemäß einer bevorzugten Ausgestaltung umfasst die Antriebs-/Empfangseinheit zumindest ein piezoelektrisches Element oder zumindest eine Spule. Es handelt sich also bevorzugt um eine piezoelektrische zumindest durch eine Kapazität gekennzeichnete oder um eine magnetische durch zumindest eine Induktivität gekennzeichnete Antriebs-/Empfangseinheit. Zumindest diese Kapazität oder Induktivität sind abhängig vom jeweiligen Prozess und damit von zumindest einem Prozessparameter, beispielsweise der Prozesstemperatur. Damit ist auch die durch zumindest die Kapazität oder Induktivität hervorgerufene Phase und damit einhergehend die jeweils vorliegende Phasenverschiebung zwischen Anregesignal und Empfangssignal von dem zumindest einen Prozessparameter abhängig. Die Beeinflussung der durch die Antriebs-/Empfangseinheit hervorgerufenen Phase durch zumindest einen Prozessparameter ist grundsätzlich aufgrund der Anordnung in direkter Umgebung zum jeweiligen Prozess verhältnismäßig groß. Die Phasenkorrektureinheit findet deshalb bevorzugt Anwendung zur Eliminierung des Einflusses zumindest eines Prozessparameters in Bezug auf die durch die Antriebs-/Empfangseinheit hervorgerufene Phase.

Es sei an dieser Stelle darauf verwiesen, dass neben den genannten Beispielen viele weitere Anordnungen, Prinzipien und/oder Ausgestaltungen elektromagnetischer Wandlereinheiten als Antriebs-/Empfangseinheit einsetzbar sind, welche ebenfalls unter die vorliegende Erfindung fallen.

Üblicherweise ist die durch eine Komponente des vibronischen Sensors hervorgerufene Phase gekennzeichnet durch zumindest eine, insbesondere charakteristische, Kenngröße. Dabei handelt es sich um eine physikalische oder chemische Größe, welche mit den Eigenschaften der jeweiligen Komponente in direktem Zusammenhang steht. Erfindungsgemäß ist die Kenngröße gegeben ist durch zumindest eine von zumindest einem Prozessparameter abhängige Kapazität oder Induktivität zumindest einer Komponente der Antriebs-/Empfangseinheit oder durch zumindest eine von zumindest einem Prozessparameter abhängige Zeitkonstante. Bei Betreiben des vibronischen Sensors mittels eines elektrischen Wechselsignals, wie normalerweise üblich, sind die Kapazität oder Induktivität direkt über einen mathematischen Zusammenhang mit einer Zeitkonstante verbunden, welche neben der Kapazität oder Induktivität auch selbst als Kenngröße herangezogen werden kann. Es versteht sich von selbst, dass, wenn der Einfluss zumindest eines Prozessparameters auf eine andere Komponente des vibronischen Sensors eliminiert werden soll, auch andere Kenngrößen in Betracht zu ziehen sind und dass darüber hinaus grundsätzlich die hier genannten Kenngrößen selbst in Bezug auf die Komponente Antriebs-/Empfangseinheit keine abschließende Liste bilden.

Unter dem Begriff Prozessparameter sei grundsätzlich eine den jeweiligen Prozess, innerhalb dessen der vibronische Sensor zum Einsatz kommt, charakterisierende physikalische und/oder chemische Größe verstanden. Gemäß einer bevorzugten Ausgestaltung ist der zumindest eine Prozessparameter gegeben durch die Prozesstemperatur oder durch den Prozessdruck. Beide Größen beeinflussen insbesondere die Antriebs-/Empfangseinheit. Es kann sich bei dem zumindest einen Prozessparameter jedoch genauso gut um eine andere charakteristische Größe, insbesondere des jeweiligen Mediums, handeln.

In einer besonders bevorzugten Ausgestaltung weist die Phasenkorrektureinheit zumindest einen Referenzzweig auf, welcher Referenzzweig zumindest ein elektrisches Bauelement umfasst, welches zumindest einer Komponente der Vorrichtung, insbesondere der Antriebs-/Empfangseinheit, parallel geschaltet und mit dem Anregesignal beaufschlagbar ist. Das zumindest eine elektrische Bauelement kommt dabei in der Regel entweder mit dem jeweiligen Prozess nicht in Berührung, so dass es nicht durch den zumindest einen Prozessparameter beeinflusst wird, oder die jeweiligen Prozessbedingungen haben keinen Einfluss auf das jeweilige Bauelement.

Beispielsweise kann für die Ausgestaltung der Phasenkorrektureinheit mit einem Referenzzweig der Phasenkorrekturwert aus einem Vergleich der zumindest einen Kenngröße der zumindest einen Komponente des vibronischen Sensors und einer entsprechenden aus einem Referenzsignal des Referenzzweiges ermittelten Referenzgröße, welche anhand des zumindest einen der jeweiligen Komponente parallel geschalteten elektrischen Bauteils ermittelt werden. Aber auch andere Verfahren zur Bestimmung des Phasenkorrekturwertes sind denkbar, welche ebenfalls unter die vorliegende Erfindung fallen.

Es ist hierbei von Vorteil, wenn der Referenzzweig zumindest eine Referenzkapazität oder eine Referenzinduktivität umfasst. In diesem Falle handelt es sich bei der Komponente der Vorrichtung bevorzugt um eine piezoelektrische oder magnetische Antriebs-/Empfangseinheit. Es ist darüber hinaus ferner von Vorteil, wenn die Referenzkapazität und zumindest eine Kapazität der Antriebs-/Empfangseinheit oder die Referenzinduktivität und zumindest eine Induktivität der Antriebs-/Empfangseinheit denselben Wert aufweisen.

Es ist ebenso von Vorteil, wenn der Referenzzweig zumindest einen, insbesondere in Reihe zu dem zumindest einen elektrischen Bauelement geschalteten, Referenzwiderstand umfasst. In diesem Falle bildet der Referenzzweig beispielsweise ein sogenanntes RC- oder RL-Glied. Diese Ausgestaltung eignet sich für den Fall, dass in Bezug auf die zumindest eine Komponente der Vorrichtung eine Zeitkonstante als Kenngröße dienen soll.

Gemäß einer bevorzugten Ausgestaltung umfasst die Phasenkorrektureinheit zumindest eine Zeitmessungseinheit. Die Zeitmessungseinheit ermöglicht die Bestimmung einer als Kenngröße dienenden Zeitkonstante.

Dabei ist es von Vorteil, wenn die Zeitmessungseinheit zumindest einen Timer-Baustein oder zumindest eine XOR-Einheit, insbesondere ein XOR-Gatter, und zumindest einen Zähler umfasst. Es ist ferner von Vorteil, wenn die Zeitmessungseinheit ein Schaltelement umfasst, wobei die Elektronikeinheit dazu ausgestaltet ist, mittels des Schaltelements in einem ersten Zeitintervall ein Referenzsignal des Referenzzweigs und in einem zweiten Zeitintervall ein Prozesssignal ausgehend von der zumindest einen Komponente der Vorrichtung an die Zeitmessungseinheit weiterzuleiten. Durch Verwendung des Schaltelements ist eine Zeitmessungseinheit ausreichend, um sowohl das Referenzsignal als auch das Prozesssignal auszuwerten und sowohl für den Referenzzweig als auch für die zumindest eine Komponente die jeweilige als Kenngröße dienende Zeitkonstante und daraus wiederum den Phasenkorrekturwert zu ermitteln.

In einer bevorzugten Ausgestaltung ist eine Explosionsschutzschaltung vorgesehen. Diese erlaubt das Betreiben des jeweiligen Feldgeräts in einer explosionsfähigen Atmosphäre und muss entsprechend verschiedenen Anforderungen genügen, um beispielsweise eine Funkenbildung, die ggf. eine Explosion auslösen könnte, zu vermeiden oder zu verhindern, dass ein im Inneren eines abgeschlossenen Raumes entstehender Funke Auswirkungen auf die Umgebung hat. In dieser Hinsicht werden verschiedene Schutzbereiche unterschieden, und entsprechend gibt es verschiedene Normen für unterschiedliche Umgebungsbedingungen und Anwendungen. Die Norm DINEN60079-11 definiert die notwendigen Sicherheitsanforderungen für einen Geräteschutz durch Eigensicherheit, bekannt unter der Abkürzung Ex-i. Hierbei handelt es sich um eine Zündschutzart, die auf der Begrenzung von elektrischer Energie innerhalb von Geräten und/oder Verbindungsleitungen, die einer möglicherweise explosionsfähigen Atmosphäre ausgesetzt sind, auf ein Niveau unterhalb dessen beruht, bei dem eine Zündung entweder durch Funkenbildung oder Erwärmung hervorgerufen werden kann. Es muss also insbesondere gewährleistet sein, dass die elektrischen Größen Strom, Spannung und Leistung in einem Gerät zu jeder Zeit jeweils unterhalb eines vorgegebenen Grenzwertes liegen. Diese Grenzwerte sind dann so gewählt, dass im Fehlerfall, z. B. durch einen Kurzschluss, die maximal entstehende Wärme nicht ausreicht, um einen Zündfunken zu erzeugen. Dazu werden Schaltungen eingesetzt, bei welchen der Strom häufig durch Widerstände, die Spannung durch Dioden, insb. Zener-Dioden, und die Leistung durch eine geeignete Kombination von strom- und spannungsbegrenzenden Bauteilen unterhalb der vorgegebenen Grenzwerte gehalten wird.

In einer Ausgestaltung umfasst die Explosionsschutzschaltung zumindest einen elektrischen Widerstand.

In einer weiteren Ausgestaltung ist die zumindest eine Prozessgröße gegeben durch einen vorgebbaren Füllstand, die Dichte, und/oder die Viskosität des Mediums in dem Behälter.

Die erfindungsgemäße Aufgabe wird ferner gelöst durch ein Verfahren zur Bestimmung und/oder Überwachung zumindest einer Prozessgröße eines Mediums in einem Behälter

- wobei eine mechanische schwingfähige Einheit mittels eines Anregesignals zu mechanischen Schwingungen angeregt wird, wobei die mechanischen Schwingungen der mechanisch schwingfähigen Einheit empfangen und in ein elektrisches Empfangssignal umgewandelt werden,
- wobei das Anregesignal ausgehend vom Empfangssignal erzeugt wird,
- wobei zwischen dem Anregesignal und Empfangssignal eine vorgebbare Phasenverschiebung eingestellt wird,
- wobei aus dem Empfangssignal die zumindest eine Prozessgröße bestimmt und/oder überwacht wird,
- wobei aus zumindest einer von zumindest einem Prozessparameter abhängigen Kenngröße ein Phasenkorrekturwert ermittelt wird,
  wobei die Kenngröße gegeben ist durch zumindest eine von zumindest einem Prozessparameter abhängige Kapazität ($C_{AE}$) oder Induktivität zumindest einer Komponente der Antriebs-/Empfangseinheit (5) oder durch zumindest eine von zumindest einem Prozessparameter abhängige Zeitkonstante ($\tau_{proz}$, $\tau_{ref}$), und
- wobei die vorgebbare Phasenverschiebung entsprechend des Phasenkorrekturwerts eingestellt wird.

Es ist dabei von Vorteil, wenn als Prozessparameter die Prozesstemperatur oder der Prozessdruck gewählt wird.

Es ist ferner von Vorteil, wenn als Kenngröße zumindest eine von zumindest einem Prozessparameter abhängige Kapazität oder Induktivität oder durch zumindest eine von zumindest einem Prozessparameter abhängige Zeitkonstante gewählt wird.

In einer bevorzugten Ausgestaltung des Verfahrens wird als Kenngröße eine von zumindest einem Prozessparameter abhängige erste Zeitkonstante ermittelt, wobei anhand eines Referenzsignals eine zweite von dem zumindest einen Prozessparameter unabhängige Zeitkonstante ermittelt wird, und wobei aus einem Vergleich der ersten und zweiten Zeitkonstante der Phasenkorrekturwert ermittelt wird.

Die Implementierung einer erfindungsgemäßen Phasenkorrektureinheit in Kombination mit einem erfindungsgemäßen Verfahren lässt noch zahlreiche weitere Anwendungen zu.

So wird gemäß einer Ausgestaltung aus zumindest einer von der Prozesstemperatur und/oder vom Prozessdruck abhängigen Kapazität oder Induktivität zumindest einer Komponente der Antriebs-/Empfangseinheit die Prozesstemperatur bestimmt. Diese lässt sich beispielsweise anhand einer Kennlinie der Induktivität und/oder Kapazität als Funktion der Temperatur ermitteln, welche wiederum beispielsweise innerhalb der Elektronikeinheit hinterlegt sein kann. Bei bekannter Kapazität bzw. Induktivität sowie bekannter Prozesstemperatur kann ferner auf den Prozessdruck geschlossen werden.

In einer weiteren Ausgestaltung des Verfahrens wird aus zumindest einer von der Prozesstemperatur und/oder vom Prozessdruck abhängigen Kapazität oder Induktivität zumindest einer Komponente der Antriebs-/Empfangseinheit auf einen Kurz- oder Nebenschluss geschlossen. Insbesondere, wenn für die Kapazität und/oder Induktivität ein außerhalb eines vorgebbaren Intervalls liegender Wert auftritt, kann aus diesem auf das Vorhandensein eines Kurz- oder Nebenschlusses geschlossen werden.

Die in Zusammenhang mit der Vorrichtung erläuterten Ausgestaltungen lassen sich mutatis mutandis auch auf die vorgeschlagenen Verfahren anwenden und umgekehrt.

Die Erfindung sowie ihre vorteilhaften Ausgestaltungen werden nachfolgend anhand der Figuren Fig. 1 - Fig. 3 näher beschrieben. Es zeigt:

Fig. 1: eine schematische Skizze eines vibronischen Sensors gemäß Stand der Technik,

Fig. 2: ein Blockschaltbild einer ersten Ausgestaltung der Erfindung,

Fig. 3 ein Blockschaltbild einer zweiten Ausgestaltung der Erfindung mit angedeuteter Explosionsschutzschaltung, und

Fig. 4 das Prozesssignal und das Referenzsignal gemäß einer Vorrichtung der Fig. 2 oder 3 als Funktion der Zeit.

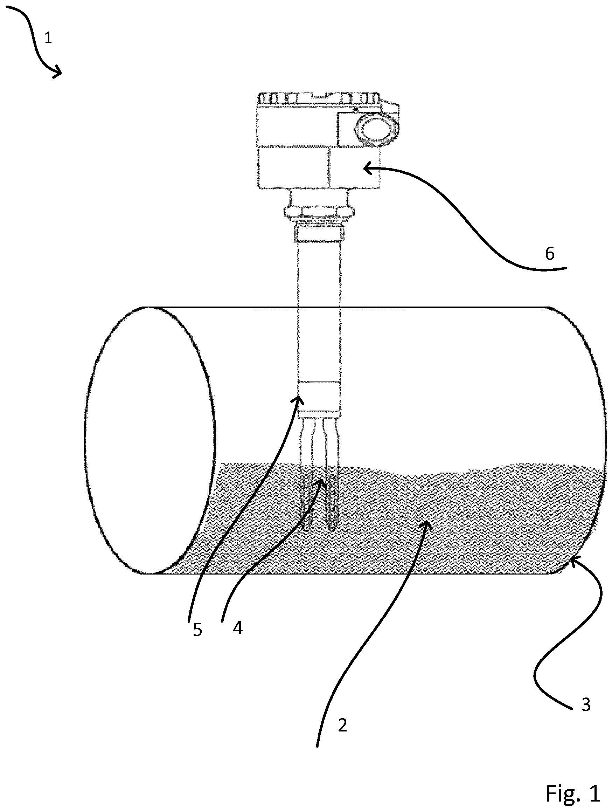

In Fig. 1 ist eine Vorrichtung 1 zur Bestimmung und/oder Überwachung zumindest einer Prozessgröße in Form eines vibronischen Sensors 1 gezeigt. Dargestellt ist eine schwingfähige Einheit 4 in Form einer Schwinggabel, welche teilweise in ein Medium 2 eintaucht, welches sich in einem Behälter 3 befindet. Die schwingfähige Einheit 4 wird mittels der Antriebs-/Empfangseinheit 5 zu mechanischen Schwingungen angeregt, und kann beispielsweise ein piezoelektrischer Stapel- oder Bimorphantrieb sein. Es versteht sich jedoch von selbst, dass auch andere Ausgestaltungen eines vibronischen Sensors unter die Erfindung fallen. Weiterhin ist eine Elektronikeinheit 6 dargestellt, mittels welcher die Signalerfassung, -auswertung und/oder -speisung erfolgt.

Die nachfolgende Beschreibung bezieht sich auf eine Phasenkorrektureinheit 7 mit einem Referenzzweig 8, welcher einer Antriebs-/Empfangseinheit 5 mit zumindest einem durch eine Kapazität $C_{AE}$ gekennzeichneten piezoelektrischen Element parallel geschaltet ist, und welcher eine Referenzkapazität $C_{ref}$ umfasst. Die mit den jeweiligen Figuren in Zusammenhang getätigten Überlegungen lassen sich ohne weiteres auf andere Komponenten des vibronischen Sensors 1 oder auf andere Ausgestaltungen für die Antriebs-/Empfangseinheit 5 übertragen.

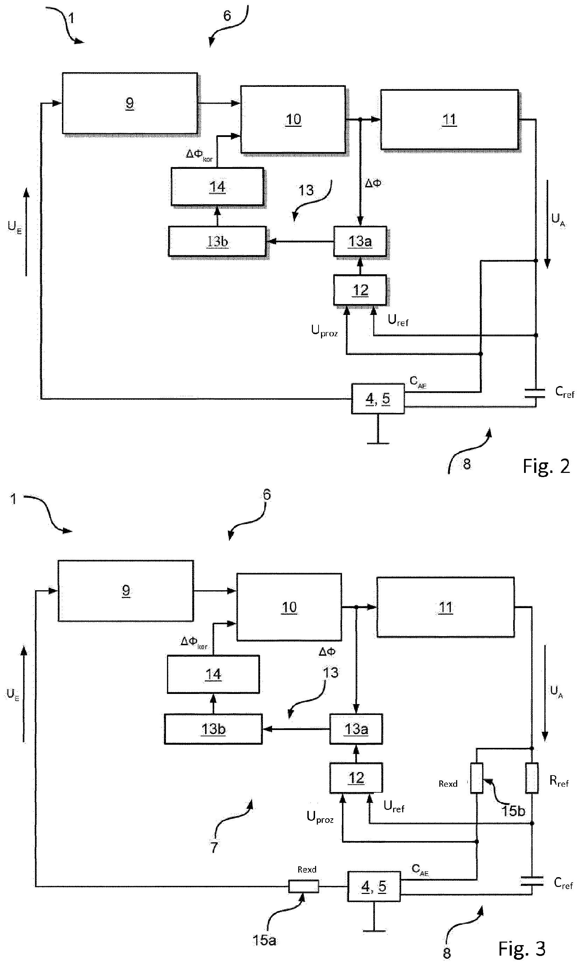

In Fig. 2 ist ein Blockschaltbild einer ersten Ausführung eines erfindungsgemäßen vibronischen Sensors mit einer entsprechenden Phasenkorrektureinheit 7 gezeigt. Die schwingfähige Einheit 4 ist in dieser Darstellung nicht extra eingezeichnet, befindet sich jedoch in unmittelbarer Umgebung der Antriebs-/Empfangseinheit 5. Mittels eines elektrischen Anregesignals $U_A$ und mittels der Antriebs-/Empfangseinheit 5 wird die mechanisch schwingfähige Einheit zu mechanischen Schwingungen versetzt. Diese mechanischen Schwingungen werden wiederum mittels der Antriebs-/Empfangseinheit 5 empfangen und in ein elektrisches Empfangssignals $U_E$ umgewandelt, welches einer Elektronikeinheit 6 zugeführt wird, welche zumindest eine Eingangsstufe 9, eine Regel- und Auswerteeinheit 10 zumindest zur Einstellung der vorgebbaren Phasenverschiebung $\Delta\Phi$ zwischen Anregesignal $U_A$ und Empfangssignal $U_E$ und zur Bestimmung und/oder Überwachung zumindest einer Prozessgröße sowie eine Ausgangsstufe 11 umfasst.

Die Phasenkorrektureinheit 7 umfasst einen Referenzzweig 8, ein Schaltelement 12 und einer Zeitmessungseinheit 13 in Form einer XOR-Einheit 13a und eines Zählers 13b. In dem hier gezeigten Beispiel umfasst die Phasenkorrektureinheit 7 ferner eine Auswerteeinheit 14 zur Ermittlung des Phasenkorrekturwerts $\Delta\Phi_{kor}$. Dieser Wert wird der Regel- und Auswerteeinheit 10 zugeführt, damit die vorgebbare Phasenverschiebung zwischen Anregesignal $U_A$ und Empfangssignal $U_E$ entsprechend des Einflusses zumindest eines Prozessparameters eingestellt werden kann.

Das Anregesignal $U_A$ wird zum einen der Antriebs-/Empfangseinheit 5 und zum anderen dem Referenzzweig 8 zugeführt. Zur Ermittlung des Phasenkorrekturwerts $\Delta\Phi_{kor}$ wiederum wird ein von der Antriebs-/Empfangseinheit ausgehendes Prozesssignal $U_{proz}$ und ein von dem Referenzzweig 8 ausgehendes Referenzsignal $U_{ref}$ einem Schaltelement zugeführt, derart, dass in einem ersten Zeitintervall das Prozesssignal der Zeitmessungseinheit 13 zugeführt wird, und in einem zweiten Zeitintervall das Referenzsignal. Es versteht sich von selbst, dass im Falle, dass zwei Zeitmessungseinheiten 13 verwendet werden, ein Schaltelement nicht mehr notwendig wäre.

In Fig. 3 ist ein ähnliches Blockschaltbild einer erfindungsgemäßen Vorrichtung 1 gezeigt, für welche eine zusätzlich eine Explosionsschutzschaltung 15 vorgesehen ist, welche zumindest die zwei Widerstände 15a, 15b umfasst, welche in Reihe vor bzw. nach der Antriebs-/Empfangseinheit geschaltet sind. Auf sonstige mit denen in Fig. 2 identische Bezugszeichen wird an dieser Stelle nicht erneut eingegangen.

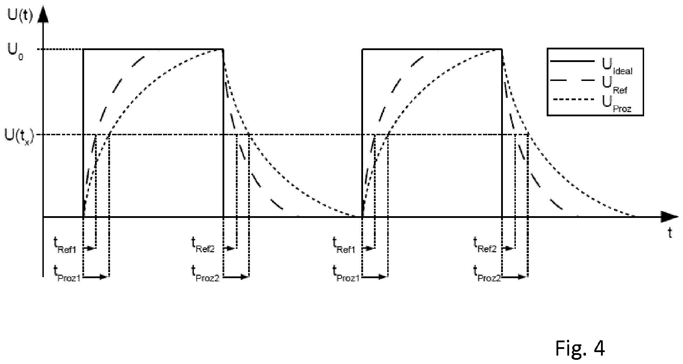

Fig. 4 dient schließlich der Illustrierung der Bestimmung des Phasenkorrekturwerts $\Delta\Phi_{kor}$ anhand einer Zeitkonstante der Kapazität C der Antriebs-/Empfangseinheit 5. Gezeigt sind das das ideale Anregesignal in Form eines Rechtecksignals $U_{ideal}$, das Prozesssignal $U_{proz}$ und das Referenzsignal $U_{ref}$ als Funktion der Zeit. Das Prozesssignal $U_{proz}$ und das Referenzsignal $U_{ref}$ werden in unterschiedlichen Zeitintervallen jeweils der Zeitmessungseinheit 13 zugeführt.

Zur Bestimmung des Phasenkorrekturwerts $\Delta\Phi_{kor}$ werden die Zeitdauern der Lade- und Entladevorgänge der Kapazitäten $C_{AE}$ und $C_{ref}$ während n Signalperioden des Anregesignals $U_{ideal}$ sowohl für das Prozesssignal $U_{proz}(t)$ als auch für das Referenzsignal $U_{ref}(t)$ betrachtet, welche mittels der Zeitmessungseinheit ermittelt werden können.

Für das Prozesssignal $U_{proz}$ ergibt sich für die Zeitdauer der Lade- und Entladevorgänge $t_{proz}$ der Kapazität C während n Signalperioden des Anregesignals $U_{ideal}$

$$t_{proz} = nt_{proz1} + nt_{proz2},$$

wobei $t_{proz1}$ jeweils die Zeit eines Ladevorgangs und $t_{proz2}$ die Zeit eines Entladevorgangs beschreibt. Analog ergibt sich in Bezug auf das Referenzsignal für die entsprechende Zeitdauer $t_{ref}$

$$t_{ref} = nt_{ref1} + nt_{ref2}.$$

Mit den aus dem Stand der Technik allgemein bekannten Formeln für einen Ladevorgang bzw. einen Entladevorgang eines Kondensators mit Kapazität C ergibt sich hieraus für die Zeitdauer der Lade- und Entladevorgänge in Bezug auf das Prozesssignal $U_{proz}$

$$t_{proz} = n\left[-\tau_{proz} * \ln\left(1 - \frac{U_{proz}(t_{proz1})}{U_0}\right)\right] + n\left[-\tau_{proz} * \ln\left(\frac{U_{proz}(t_{proz2})}{U_0}\right)\right]$$

$$t_{proz} = -n\tau_{proz} * \left[\ln\left(1 - \frac{U_{proz}(t_{proz1})}{U_0}\right) + \ln\left(\frac{U_{proz}(t_{proz2})}{U_0}\right)\right],$$

wobei $U_0$ die Amplitude des idealen Anregesignals $U_{ideal}$ ist.

Analog ergibt sich in Bezug auf das Referenzsignal $U_{ref}$:

$$t_{ref} = n\left[-\tau_{ref} * \ln\left(1 - \frac{U_{ref}(t_{ref1})}{U_0}\right)\right] + n\left[-\tau_{ref} * \ln\left(\frac{U_{ref}(t_{ref2})}{U_0}\right)\right]$$

$$t_{ref} = -n\tau_{ref} * \left[\ln\left(1 - \frac{U_{ref}(t_{ref1})}{U_0}\right) + \ln\left(\frac{U_{ref}(t_{ref1})}{U_0}\right)\right]$$

Mit der Randbedingung, dass:

$$U_{proz}(t_{proz1}) = U_{ref}(t_{ref1}) = U_{proz}(t_{proz2}) = U_{ref}(t_{ref2}) = \, ! \, U(t_x)$$

ist, folgt:

$$t_{proz} = -n\tau_{proz} * \left[\ln\left(1 - \frac{U(t_x)}{U_0}\right) + \ln\left(\frac{U(t_x)}{U_0}\right)\right],$$

und

$$t_{ref} = -n\tau_{ref} * \left[\ln\left(1 - \frac{U(t_x)}{U_0}\right) + \ln\left(\frac{U(t_x)}{U_0}\right)\right].$$

Der jeweilige Phasenkorrekturwert $\Delta\Phi_{kor}$ kann dann beispielsweise durch Differenzbildung der Zeitdauern $t_{ref}$ und $t_{proz}$ ermittelt werden. Es ergibt sich

$$t_{ref} - t_{proz} = -n\tau_{ref} * \left[\ln\left(1 - \frac{U(t_x)}{U_0}\right) + \ln\left(\frac{U(t_x)}{U_0}\right)\right] + n\tau_{proz} * \left[\ln\left(1 - \frac{U(t_x)}{U_0}\right) + \ln\left(\frac{U(t_x)}{U_0}\right)\right]$$

$$t_{ref} - t_{proz} = n(\tau_{proz} - \tau_{ref})\left[\ln\left(1 - \frac{U(t_x)}{U_0}\right) + \ln\left(\frac{U(t_x)}{U_0}\right)\right]$$

Die Zeitdifferenz $t_{ref}$ - $t_{proz}$ kann dann beispielsweise auf $t_{ref}$ bezogen werden. Daraus folgt:

$$\frac{t_{ref} - t_{proz}}{t_{ref}} = -\frac{(\tau_{proz} - \tau_{ref})}{\tau_{ref}} = \frac{(\tau_{ref} - \tau_{proz})}{\tau_{ref}} = \frac{(C_{ref} - C_{AE})}{C_{ref}},$$

woraus sich wiederum der Phasenkorrekturwert $\Delta\Phi_{kor}$ ermitteln lässt.

Alternativ können die Zeitdauern für die Entlade- und Ladevorgänge im Referenzzweig $t_{ref}$ und im Prozesszweig $t_{proz}$ auch direkt aufeinander bezogen werden werden:

$$\frac{t_{proz}}{t_{ref}} = -\frac{\tau_{proz}}{\tau_{ref}} = \frac{C_{AE}}{C_{ref}}.$$

Schließlich sei noch darauf verwiesen, dass die Zeitdauern $t_{ref}$ und $t_{proz}$ jeweils auch dann bestimmt werden können, wenn entweder nur die Ladevorgänge oder nur die Entladevorgänge der Kapazitäten $C_{AE}$ und $C_{ref}$ in Bezug auf das Prozesssignal $U_{proz}$ und in Bezug auf das Referenzsignal $U_{ref}$ betrachtet werden.

**Bezugszeichenliste**

| | |
|---|---|
| 1 | Vibronischer Sensor |
| 2 | Medium |
| 3 | Behälter |
| 4 | Schwingfähige Einheit |
| 5 | Elektromechanische Wandlereinheit |
| 6 | Elektronikeinheit |
| 7 | Phasenkorrektureinheit |
| 8 | Referenzzweig |
| 9 | Eingangsstufe |
| 10 | Regel-/Auswerteeinheit |
| 11 | Ausgangsstufe |
| 12 | Schaltelement |
| 13 | Zeitmessungseinheit |
| 13a | XOR-Einheit |
| 13b | Zähler |
| 14 | Auswerteeinheit |
| 15 | Explosionsschutzschaltung |
| $U_A$ | Anregesignal |
| $U_E$ | Empfangssignal |
| $U_{Proz}$ | Anregesignal |
| $U_{Ref}$ | Empfangssignal |
| $\Delta\Phi$ | vorgebbare Phasenverschiebung |
| $\Delta\Phi_{kor}$ | Phasenkorrekturwert |
| $C_{AE}$ | Kapazität der Antriebs-/Empfangseinheit |
| $C_{ref}$ | Referenzkapazität |
| $R_{ref}$ | Referenzwiderstand |
| $R_{exd}$ | Widerstand der Explosionsschutzschaltung |
| $\tau_{proz}$ | Zeitkonstante der Kapazität der Antriebs-/Empfangseinheit |
| $t_{ref}$ | Zeitdauer der Lade- und Entladevorgänge in Bezug auf $U_{ref}$ |
| $t_{proz}$ | Zeitdauer der Lade- und Entladevorgänge in Bezug auf $U_{proz}$ |
| $\tau_{ref}$ | Zeitkonstante des Referenzzweiges |
| $\tau_{proz}$ | Zeitkonstante der Kapazität der Antriebs-/Empfangseinheit |
| $U_{ideal}$ | ideales Anregesignal in Form eines Rechtecksignals |
| $U_0$ | Amplitude des idealen Empfangssignals |
| | |
| T | Prozesstemperatur |
| P | Prozessdruck |

**Patentansprüche**

1. Vorrichtung (1) zur Bestimmung und/oder Überwachung zumindest einer Prozessgröße eines Mediums (2) in einem Behälter (3) zumindest mit

- einer mechanisch schwingfähigen Einheit (4),
- einer Antriebs-/Empfangseinheit (5) zur Anregung der mechanisch schwingfähigen Einheit (4) zu mechanischen Schwingungen mittels eines elektrischen Anregesignals ($U_A$) und zum Empfangen und Umwandeln der mechanischen Schwingungen in ein elektrisches Empfangssignal ($U_E$),
- einer Elektronikeinheit (6),
welche Elektronikeinheit (6) dazu ausgestaltet ist,

- das Anregesignal ($U_A$) ausgehend vom Empfangssignal ($U_E$) zu erzeugen,
- eine vorgebbare Phasenverschiebung ($\Delta\Phi$) zwischen dem Anregesignal ($U_A$) und dem Empfangssignal ($U_E$) einzustellen, und
- die zumindest eine Prozessgröße aus dem Empfangssignal ($U_E$) zu bestimmen und/oder zu überwachen, und

- eine Phasenkorrektureinheit (7), welche Phasenkorrektureinheit (7) zumindest dazu ausgestaltet ist,

- aus zumindest einer von zumindest einem Prozessparameter abhängigen Kenngröße zumindest einer Komponente der Vorrichtung (1), insbesondere der Antriebs-/Empfangseinheit (5), einen Phasenkorrekturwert ($\Delta\Phi_{kor}$) zu ermitteln, und
- die vorgebbare Phasenverschiebung ($\Delta\Phi$) entsprechend des Phasenkorrekturwerts ($\Delta\Phi_{kor}$) einzustellen,

**gekennzeichnet dadurch,**
**dass** die Kenngröße gegeben ist durch zumindest eine von zumindest einem Prozessparameter abhängige Kapazität ($C_{AE}$) oder Induktivität zumindest einer Komponente der Antriebs-/Empfangseinheit oder durch zumindest eine von zumindest einem Prozessparameter abhängige Zeitkonstante ($T_{proz}$, $T_{ref}$).

2. Vorrichtung nach Anspruch 1,
**gekennzeichnet dadurch,**
**dass** die Antriebs-/Empfangseinheit (5) zumindest ein piezoelektrisches Element ($C_{AE}$) oder zumindest eine Spule umfasst.

3. Vorrichtung nach zumindest einem der vorhergehenden Ansprüche,
**gekennzeichnet dadurch,**
**dass** der zumindest eine Prozessparameter gegeben ist durch die Prozesstemperatur (T) oder durch den Prozessdruck (P).

4. Vorrichtung nach zumindest einem der vorhergehenden Ansprüche,
**gekennzeichnet dadurch,**
**dass** die Phasenkorrektureinheit (7) zumindest einen Referenzzweig (8) aufweist, welcher Referenzzweig (8) zumindest ein elektrisches Bauelement ($C_{ref}$) umfasst, welches zumindest einer Komponente der Vorrichtung, insbesondere der Antriebs-/Empfangseinheit, parallel geschaltet und mit dem Anregesignal beaufschlagbar ist.

5. Vorrichtung nach Anspruch 4,
**gekennzeichnet dadurch,**
**dass** der Referenzzweig (8) zumindest eine Referenzkapazität ($C_{ref}$) oder eine Referenzinduktivität umfasst.

6. Vorrichtung nach Anspruch 5,
**gekennzeichnet dadurch,**
**dass** die Referenzkapazität ($C_{ref}$) und zumindest eine Kapazität ($C_{AE}$) der Antriebs-/Empfangseinheit (5) oder die Referenzinduktivität und zumindest eine Induktivität der Antriebs-/Empfangseinheit (5) denselben Wert aufweisen.

7. Vorrichtung nach zumindest einem der Ansprüche 4-6,
**gekennzeichnet dadurch,**
**dass** der Referenzzweig (7) zumindest einen, insbesondere in Reihe zu dem zumindest einen elektrischen Bauelement ($C_{ref}$) geschalteten, Referenzwiderstand ($R_{ref}$) umfasst.

8. Vorrichtung nach zumindest einem der vorhergehenden Ansprüche,
**gekennzeichnet dadurch,**
**dass** die Phasenkorrektureinheit (7) zumindest eine Zeitmessungseinheit (13) umfasst.

9. Vorrichtung nach Anspruch 8,

**gekennzeichnet dadurch,**
**dass** die Zeitmessungseinheit (13) zumindest einen Timer-Baustein oder zumindest eine XOR-Einheit (13a) und zumindest einen Zähler (13b) umfasst.

**10.** Vorrichtung nach Anspruch 8 oder 9 und 4,
**gekennzeichnet dadurch,**
**dass** die Zeitmessungseinheit (13) ein Schaltelement (12) umfasst, und dass die Elektronikeinheit (6) dazu ausgestaltet ist, mittels des Schaltelements (12) in einem ersten Zeitintervall ein Referenzsignal ($U_{ref}$) des Referenzzweigs (78) und in einem zweiten Zeitintervall ein Prozesssignal ($U_{Proz}$) ausgehend von der zumindest einen Komponente der Vorrichtung (1) an die Zeitmessungseinheit (13) weiterzuleiten.

**11.** Vorrichtung nach zumindest einem der vorhergehenden Ansprüche,
**gekennzeichnet dadurch,**
**dass** eine Explosionsschutzschaltung (15) vorgesehen ist.

**12.** Verfahren zur Bestimmung und/oder Überwachung zumindest einer Prozessgröße eines Mediums (2) in einem Behälter (3)

- wobei eine mechanische schwingfähige Einheit (4) mittels eines Anregesignals ($U_A$) zu mechanischen Schwingungen angeregt wird, wobei die mechanischen Schwingungen der mechanisch schwingfähigen Einheit empfangen und in ein elektrisches Empfangssignal ($U_E$) umgewandelt werden,
- wobei das Anregesignal ($U_A$) ausgehend vom Empfangssignal ($U_E$) erzeugt wird,
- wobei zwischen dem Anregesignal ($U_A$) und Empfangssignal ($U_E$) eine vorgebbare Phasenverschiebung ($\Delta\Phi$) eingestellt wird,
- wobei aus dem Empfangssignal ($U_E$) die zumindest eine Prozessgröße bestimmt und/oder überwacht wird,
- wobei aus zumindest einer von zumindest einem Prozessparameter abhängigen Kenngröße ein Phasenkorrekturwert ($\Delta\Phi_{kor}$) ermittelt wird,
- wobei die Kenngröße gegeben ist durch zumindest eine von zumindest einem Prozessparameter abhängige Kapazität ($C_{AE}$) oder Induktivität zumindest einer Komponente der Antriebs-/Empfangseinheit (5) oder durch zumindest eine von zumindest einem Prozessparameter abhängige Zeitkonstante ($_{Tproz}$, $T_{ref}$), und
- dass die vorgebbare Phasenverschiebung ($\Delta\Phi$) entsprechend des Phasenkorrekturwerts ($\Delta\Phi_{kor}$) eingestellt wird.

**13.** Verfahren nach Anspruch 12,
**gekennzeichnet dadurch,**
**dass** als Kenngröße eine von zumindest einem Prozessparameter abhängige erste Zeitkonstante ($\tau_{proz}$) ermittelt wird, dass anhand eines Referenzsignals ($U_{ref}$) eine zweite von dem zumindest einen Prozessparameter unabhängige Zeitkonstante ($\tau_{ref}$) ermittelt, und dass aus einem Vergleich der ersten ($\tau_{proz}$) und zweiten Zeitkonstante ($\tau_{ref}$) der Phasenkorrekturwert ($\Delta\Phi_{kor}$) ermittelt wird.

**14.** Verfahren nach zumindest einem der Ansprüche 12 oder 13,
**gekennzeichnet dadurch,**
**dass** aus zumindest einer von der Prozesstemperatur (T) und/oder vom Prozessdruck (P) abhängigen Kapazität ($C_{AE}$) oder Induktivität zumindest einer Komponente der Antriebs-/Empfangseinheit (5) die Prozesstemperatur (T) bestimmt wird.

**15.** Verfahren nach zumindest einem der Ansprüche 12-14,
**gekennzeichnet dadurch,**
**dass** aus zumindest einer von der Prozesstemperatur (T) und/oder vom Prozessdruck (P) abhängigen Kapazität ($C_{AE}$) oder Induktivität zumindest einer Komponente der Antriebs-/Empfangseinheit (5) auf einen Kurz- oder Nebenschluss geschlossen wird.

**Claims**

1. Apparatus (1) designed to determine and/or monitor at least a process variable of a medium (2) in a vessel (3) with at least

- a unit capable of vibrating mechanically (4),
- a drive/reception unit (5) designed to excite the unit capable of vibrating mechanically (4) to perform mechanical vibrations by means of an electrical excitation signal ($U_A$), and to receive and convert the mechanical vibrations to an electrical reception signal ($U_E$),
- an electronic unit (6),
wherein said electronic unit (6) is designed to

∘ generate the excitation signal ($U_A$) on the basis of the reception signal ($U_E$),
∘ set a predefinable phase shift ($\Delta\Phi$) between the excitation signal ($U_A$) and the reception signal ($U_E$), and
∘ determine and/or monitor the at least one process variable from the reception signal ($U_E$),

and
- a phase correction unit (7),
wherein said phase correction unit (7) is at least designed to

∘ determine a phase correction value ($\Delta\Phi_{kor}$) from at least one characteristic variable, which depends on at least a process parameter, at least of a component of the apparatus (1), particularly the drive/reception unit (5),
and
∘ set the predefinable phase shift ($\Delta\Phi$) in line with the phase correction value ($\Delta\Phi_{kor}$),

**characterized in that**
the characteristic variable is defined by at least a capacitance ($C_{AE}$) or an inductance, which depends on at least one process parameter, at least of a component of the drive/reception unit or by at least a time constant ($T_{proz}$, $T_{ref}$) which depends on at least one process parameter.

2. Apparatus as claimed in Claim 1,
**characterized in that**
the drive/reception unit (5) comprises at least a piezoelectric element ($C_{AE}$) or at least a coil.

3. Apparatus as claimed in at least one of the previous claims,
**characterized in that**
the at least one process parameter is defined by the process temperature (T) or by the process pressure (P).

4. Apparatus as claimed in at least one of the previous claims,
**characterized in that**
the phase correction unit (7) has at least a reference branch (8), wherein said reference branch (8) comprises at least an electric component ($C_{ref}$) which is switched in parallel with at least a component of the apparatus, particularly the drive/reception unit, and can be exposed to the excitation signal.

5. Apparatus as claimed in Claim 4,
**characterized in that**
the reference branch (8) comprises at least a reference capacitance ($C_{ref}$) or a reference inductance.

6. Apparatus as claimed in Claim 5,
**characterized in that**
the reference capacitance ($C_{ref}$) and at least a capacitance ($C_{AE}$) of the drive/reception unit or the reference inductance and at least an inductance of the drive/reception unit have the same value.

7. Apparatus as claimed in at least one of the Claims 4 to 6,
**characterized in that**
the reference branch (7) comprises at least a reference resistance ($R_{ref}$), which is particularly switched in series to the at least one electric component ($C_{ref}$).

8. Apparatus as claimed in at least one of the previous claims,
**characterized in that**
the phase correction unit (7) comprises at least a time measurement unit (13).

**9.** Apparatus as claimed in Claim 8,
**characterized in that**
the time measurement unit (13) comprises at least a timer module or at least an XOR unit (13a) and at least a counter (13b).

**10.** Apparatus as claimed in Claim 8 or 9 and 4,
**characterized in that**
the time measurement unit (13) comprises a switching element (12), and **in that** the electronic unit (6) is designed to transmit, by means of the switching element (12), a reference signal ($U_{ref}$) of the reference branch (8) in a first time interval, and a process signal ($U_{Proz}$) in a second time interval, from the at least one component of the apparatus (1) to the time measurement unit (13).

**11.** Apparatus as claimed in at least one of the previous claims,
**characterized in that**
an explosion protection circuit (15) is provided.

**12.** Procedure designed to determine and/or monitor at least a process variable of a medium (2) in a vessel (3)

- wherein a unit capable of vibrating mechanically (4) is excited to perform mechanical vibrations by means of an excitation signal ($U_A$), wherein the mechanical vibrations of the unit capable of vibrating mechanically are received and converted to an electrical reception signal ($U_E$),
- wherein the excitation signal ($U_A$) is generated from the reception signal ($U_E$),
- wherein a predefinable phase shift ($\Delta\Phi$) is set between the excitation signal ($U_A$) and the reception signal ($U_E$)
- wherein the at least one process variable is determined and/or monitored from the reception signal ($U_E$),
- wherein a phase correction value ($\Delta\Phi_{kor}$) is determined from at least a characteristic variable depending on at least a process parameter,
- wherein the characteristic variable is defined by at least a capacitance ($C_{AE}$) or an inductance, which depends on at least a process parameter, of at least a component of the drive/reception unit (5) or by at least a time constant ($T_{proz}$, $T_{ref}$) that depends on at least one process parameter,
and
- in that the predefinable phase shift ($\Delta\Phi$) is set depending on the phase correction value ($\Delta\Phi_{kor}$).

**13.** Procedure as claimed in Claim 12,
**characterized in that**
a first time constant ($\tau_{proz}$), which depends on at least one process parameter, is determined as a characteristic variable, a second time constant ($\tau_{ref}$), which is independent of the at least one process parameter, is determined on the basis of a reference signal ($U_{ref}$), and **in that** the phase correction value ($\Delta\Phi_{kor}$) is determined from a comparison of the first ($\tau_{proz}$) and the second time constant ($\tau_{ref}$).

**14.** Procedure as claimed in at least one of the Claims 12 or 13,
**characterized in that**
the process temperature (T) is determined from at least a capacitance ($C_{AE}$) or an inductance, depending on the process temperature (T) and/or the process pressure (P), of at least a component of the drive/reception unit (5).

**15.** Procedure as claimed in at least one of the Claims 12 to 14,
**characterized in that**
at least a capacitance ($C_{AE}$) or an inductance, depending on the process temperature (T) and/or the process pressure (P), of at least a component of the drive/reception unit (5) implies a short-circuit or a shunt.

**Revendications**

**1.** Dispositif (1) destiné à la détermination et/ou la surveillance d'au moins une grandeur de process d'un produit (2) dans un réservoir (3) avec au moins

- une unité apte à vibrer mécaniquement (4),
- une unité d'entraînement / de réception (5) destinée à l'excitation de l'unité apte à vibrer mécaniquement (4) en vibrations mécaniques au moyen d'un signal d'excitation électrique ($U_A$), et à la réception et à la conversion des vibrations mécaniques en un signal de réception électrique ($U_E$),
- une unité électronique (6),
laquelle unité électronique (6) est conçue pour

- générer le signal d'excitation ($U_A$) sur la base du signal de réception ($U_E$),
- régler un déphasage ($\Delta\Phi$) prédéfinissable entre le signal d'excitation ($U_A$) et le signal de réception ($U_E$), et
- déterminer et/ou surveiller au moins une grandeur de process à partir du signal de réception ($U_E$),

et
- une unité de correction de phase (7),
laquelle unité de correction de phase (7) est au moins conçue pour

- déterminer une valeur de correction de phase ($\Delta\Phi_{kor}$) à partir d'au moins une grandeur caractéristique, dépendant d'au moins un paramètre de process, d'au moins un composant du dispositif (1), notamment l'unité d'entraînement / de réception (5),
et
- régler le déphasage ($\Delta\Phi$) prédéfinissable en fonction de la valeur de correction de phase ($\Delta\Phi_{kor}$),

**caractérisé**
**en ce que** la grandeur caractéristique est définie par au moins une capacité ($C_{AE}$) ou une inductance, dépendant d'au moins un paramètre de process, d'au moins un composant de l'unité d'entraînement / de réception ou par au moins une constante de temps ($T_{proz}$, $T_{ref}$) dépendant d'au moins un paramètre de process.

2. Dispositif selon la revendication 1,
**caractérisé**
**en ce que** l'unité d'entraînement / de réception (5) comprend au moins un élément piézoélectrique ($C_{AE}$) ou au moins une bobine.

3. Dispositif selon au moins l'une des revendications précédentes,
**caractérisé**
**en ce que** l'au moins un paramètre du process est défini par la température de process (T) ou par la pression de process (P).

4. Dispositif selon au moins l'une des revendications précédentes,
**caractérisé**
**en ce que** l'unité de correction de phase (7) présente au moins une branche de référence (8), laquelle branche de référence (8) comprend au moins un composant électrique ($C_{ref}$) qui est couplé en parallèle avec au moins un composant du dispositif, notamment l'unité d'entraînement / de réception, et peut être alimenté avec le signal d'excitation.

5. Dispositif selon la revendication 4,
**caractérisé**
**en ce que** la branche de référence (8) comprend au moins un capacité de référence ($C_{ref}$) ou une inductance de référence.

6. Dispositif selon la revendication 5,
**caractérisé**
**en ce que** la capacité de référence ($C_{ref}$) et au moins une capacité ($C_{AE}$) de l'unité d'entraînement / de réception ou l'inductance de référence et au moins une inductance de l'unité d'entraînement / de réception ont la même valeur.

7. Dispositif selon au moins l'une des revendications 4 à 6,
**caractérisé**
**en ce que** la branche de référence (7) comprend au moins une résistance de référence ($R_{ref}$) couplée, notamment en série, à l'au moins un composant électrique ($C_{ref}$).

8. Dispositif selon au moins l'une des revendications précédentes,
**caractérisé**
**en ce que** l'unité de correction de phase (7) comprend au moins une unité de chronométrage (13).

**9.** Dispositif selon la revendication 8,
**caractérisé**
**en ce que** l'unité de chronométrage (13) comprend au moins un module temporisateur ou au moins une unité XOR (13a) et au moins un compteur (13b).

**10.** Dispositif selon la revendication 8 ou 9 et 4,
**caractérisé**
**en ce que** l'unité de chronométrage (13) comprend un élément de commutation (12), et **en ce que** l'unité électronique (6) est conçue pour transmettre au moyen de l'élément de commutation (12) un signal de référence ($U_{ref}$) de la branche de référence (8) dans un premier intervalle de temps et un signal de process ($U_{Proz}$) dans un second intervalle de temps à partir d'au moins un composant du dispositif (1), à l'unité de chronométrage (13).

**11.** Dispositif selon au moins l'une des revendications précédentes,
**caractérisé**
**en ce qu'**est prévu un circuit antidéflagrant (15).

**12.** Procédé destiné à la détermination et/ou la surveillance d'au moins une grandeur de process d'un produit (2) dans un réservoir (3)

- l'unité apte à vibrer mécaniquement (4) étant excitée en vibrations mécaniques au moyen d'un signal d'excitation ($U_A$), les vibrations mécaniques de l'unité apte à vibrer mécaniquement étant reçues et converties en un signal de réception électrique ($U_E$),
- le signal d'excitation ($U_A$) étant généré à partir du signal de réception ($U_E$),
- un déphasage ($\Delta\Phi$) prédéfinissable étant réglé entre le signal d'excitation ($U_A$) et le signal de réception ($U_E$)
- au moins une grandeur de process étant déterminée et/ou surveillée à partir du signal de réception ($U_E$),
- une valeur de correction de phase ($\Delta\Phi_{kor}$) étant déterminée à partir d'au moins une grandeur caractéristique dépendant d'au moins un paramètre de process,
- la grandeur caractéristique étant définie par au moins une capacité ($C_{AE}$) ou une inductance, dépendant d'au moins un paramètre de process, d'au moins un composant de l'unité d'entraînement / de réception (5) ou par au moins une constante de temps ($T_{proz}$, $T_{ref}$) dépendant d'au moins un paramètre de process, et
- en ce que le déphasage ($\Delta\Phi$) prédéfinissable est réglé en fonction de la valeur de correction de phase ($\Delta\Phi_{kor.}$).

**13.** Procédé selon la revendication 12,
**caractérisé**
**en ce qu'**une première constante de temps ($T_{proz}$), qui dépend d'au moins un paramètre de process, est déterminée comme grandeur caractéristique, qu'une deuxième constante de temps ($T_{ref}$), qui est indépendante d'au moins un paramètre de process, est déterminée sur la base d'un signal de référence ($U_{ref}$), et **en ce que** la valeur de correction de phase ($\Delta\Phi_{kor}$) est déterminée à partir d'une comparaison de la première ($\tau_{proz}$) et de la deuxième constante de temps (Tref).

**14.** Procédé selon au moins l'une des revendications 12 ou 13,
**caractérisé**
**en ce que** la température de process (T) est déterminée à partir d'au moins une capacité ($C_{AE}$) ou une inductance, dépendant de la température de process (T) et/ou de la pression de process (P), d'au moins un composant de l'unité d'entraînement / de réception (5).

**15.** Procédé selon au moins l'une des revendications 12 à 14,
**caractérisé**
**en ce qu'**un court-circuit ou un shunt est déduit à partir d'au moins une capacité ($C_{AE}$) ou une inductance, dépendant de la température de process (T) et/ou de la pression de process (P), d'au moins un composant de l'unité d'entraînement / de réception (5).

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- DE 102006034105 A1
- DE 102007013557 A1
- DE 102005015547 A1
- DE 102009026685 A1
- DE 102009028022 A1
- DE 102010030982 A1
- DE 10057974 A1
- DE 102006033819 A1
- DE 10050299 A1
- DE 102007043811 A1
- WO 2004018974 A2